# EUROPEAN PATENT APPLICATION

(11) **EP 0 565 764 A1**
(43) Date of publication of application: **20.10.1993**
(21) Application number: 92106718.7
(22) Date of filing: 17.04.1992
(51) Int. Cl.: G09F 13/18

(54) **Lighted advertising sign**

(71) Applicant: PUBLIMOTION S.r.l., I-37138 Verona (IT)
(72) Inventor: Castellaro, Fulvio, I-10139 Torino (IT); Ghigliotti, Aldo, I-10046 Poirino (IT)
(74) Representative: Aprà, Mario

(57) **Abstract**

Lighted advertising sign, including at least one advertising panel and at least one light source, in which multichromatic optical filter means (14), exhibiting at least two chromatically differentiated filtering sectors (14.2, 14.3, 14.4) are disposed to intercept a beam of luminous radiations emitted by said at least one light source, to illuminate - directly or indirectly - said at least one advertising panel (11), and are movable with respect to said light source (13), so as to interpose, in selective mode or in automatic sequence, different ones of their filtering sectors (14.2, 14.3, 14.4) between said at least one light source (13) and said at least one panel (11), thus permitting the variation, continuously or according to selection by the user of the chromaticity of the luminous radiations passing through for the illumination of said panel.

## Description

The present invention relates to a lighted advertising sign, in particular having a panel which is illuminated by means of light passing through at least one of its lateral edges.

Lighted advertising signs of the type specified are known.
Such signs comprise a casing, which is for example box-like, having at least one panel bearing advertising messages. In these signs there is provided a source of white or monochromatic light, which source is preferably linear and is disposed to illuminate each panel in a diffuse manner or extends, for example, along a lateral edge of the panel to be illuminated, which is transparent or translucent. In the latter case, the panel exhibits advertising messages or the like which are incised, for example by means of milling, on one of its faces, in such a manner as to be legible on the opposite face. The light emitted by the source and passing through the adjacent lateral edge of the panel is reflected and/or diffracted and/or diffused through the grooves of the incisions, with the effect of highlighting the advertising messages which are incised and made luminous with respect to the remaining part of the panel.
Nevertheless, the known lighted advertising signs of the aforementioned type prove to be of little attraction on account of the fixed colours of the light utilised.

The principal object of the present invention is to provide a lighted advertising sign of the type specified, in which the coloration of the light radiations utilised for the illumination of at least one panel, in a diffuse manner or by means of light passing through at least one of its lateral edges, may be selectively or automatically varied, in such a manner as to increase the attractiveness of the luminous advertising messages exhibited by said sign.
A further object is to provide a lighted advertising sign of the type indicated, which is of simplified structure, safe and reliable in use, easy to instal and maintain, and of relatively low cost.

With these objects in view, the present invention provides a lighted advertising sign, the essential feature of which forms the subject of the characterising clause of Claim 1.
Further advantageous features emerge from the subclaims, which are understand as forming an integral part hereof.

The present invention will become more clearly evident from the detailed description which follows, with reference to the accompanying illustrative drawings, in which:
- Fig. 1 is a front elevation view of a lighted advertising sign according to an illustrative embodiment of the invention;
- Fig. 2 is a cross-sectional view along the line II-II of Fig. 1;
- Fig. 3 is a cross-sectional view, on a larger scale, along the line III-III of Fig. 1;
- Fig. 4 is a perspective view, on a larger scale, of a component part of the sign according to Fig. 1.

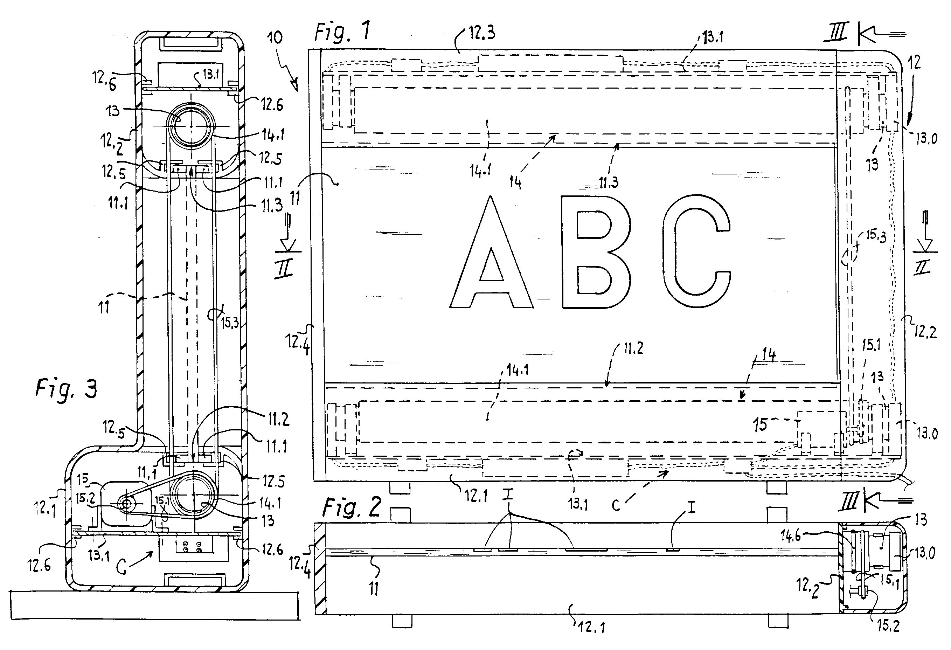

In the drawings, 10 (Fig. 1) indicates, in its entirety, the lighted advertising sign according to said illustrative embodiment of the invention.

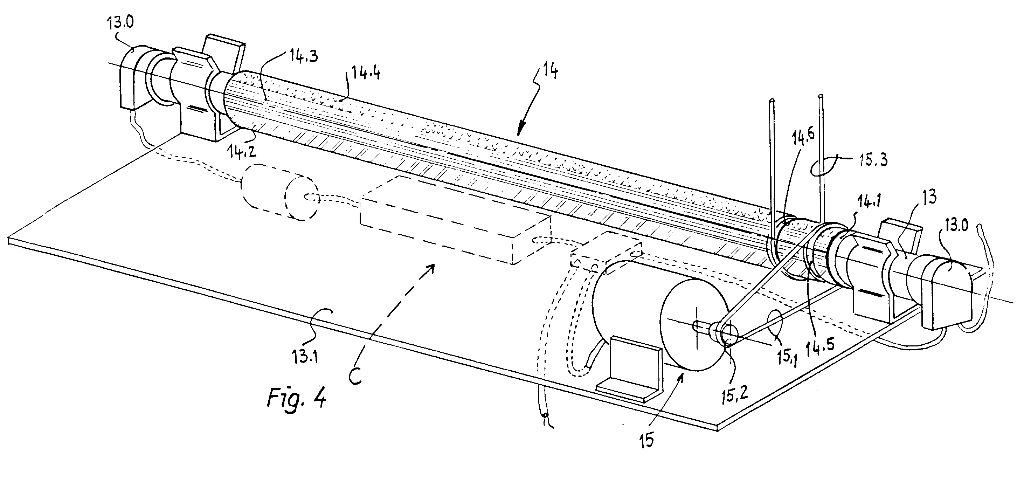

The advertising sign 10 comprises a rectangular panel 11 of transparent or translucent material, for example of polymethyl methacrylate ("Plexiglas", registered trademark). The panel 11 exhibits, on one of its faces, incisions I, which are obtained for example by means of milling, and which form an advertising message which is legible through the opposite face. Said panel 11 is supported in a frame 12, with a substantially rectangular perimeter and formed by a base crossmember 12.1, a lateral upright 12.2 and a top crossmember 12.3 with a closed box-like body, for example of plastic material or metal. The other lateral upright, 12.4, is conformed in the manner of a flat cover, for example of plastic material or metal. The upper wall of the base crossmember 12.1 and the lower wall of the top crossmember 12.3 exhibit respective continuous longitudinal slits, through which the panel 11 is inserted. Longitudinal supporting rods 11.1, for example of plastic material, are fixed, for example by adhesive bonding, on the two faces of the panel 11, substantially at the level of the lower and upper longitudinal lateral edges 11.2 and 11.3 respectively of said panel. Said supporting rods 11.1 are received, in a removable manner in the longitudinal direction, in respective pairs of "C"-shaped longitudinal guides 12.5, which are opposed by the two sides of each slit and provided so as to be integral with respect to each one of said walls, i.e. the upper wall of the base crossmember 12.1 and the lower wall of the top crossmember 12.3 of the frame 12. Such an arrangement ensures the firm support of the panel 11 in the frame 12, in such a manner that it can be extracted after removal of the lateral upright 12.4, and leaving free the lower and upper longitudinal lateral edges thereof, 11.2 and 11.3 respectively.
Respective linear sources 13 of white or monochromatic light are accommodated and supported in the base crossmember 12.1 and in the top crossmember 12.3 of the frame 12. Each light source 13 is in this case constituted by an electrical lamp with a cylindrical body, which lamp is positioned in proximity to a respective longitudinal lateral edge 11.2, 11.3 of the panel 11, with its axis substantially parallel to said edge. As is clearly evident in Fig. 4, each lamp is separably fixed, with its respective electrical connecting terminals 13.0, with respect to a face of a support plate, which may be made of metal, 13.1, carrying, fixed on the opposite face, electrical circuit means, diagrammatically represented at C, for connection of said lamp with respect to electrical supply and control means (not shown). Said electrical lamp 13, together with the pertinent electrical terminals 13.0 and the circuit means C are, of course, electrically insulated with respect to the plate 13.1, which is supported, in such a manner that it can be extracted in the longitudinal direction, with respect to opposed pairs of "C"-shaped guides 12.6, projecting from the internal faces of the longitudinal lateral walls of the base crossmember 12.1 and of the top crossmember 12.3 of the frame 12.
Each light source 13 is, for example, constituted by a gas discharge lamp, such as a neon fluorescent lamp.

According to the invention, there are provided multichromatic optical filter means 14, with a tubular body 14.1, which are disposed between each electrical lamp 13 and the respective opposite lateral edge 11.2, 11.3 of the panel 11. Said tubular body 14.1 is fitted coaxially on the corresponding tubular lamp 13, with play both in the radial direction and in the axial direction, to permit the free rotation of said body 14.1 about said lamp 13, as well as possible axial extensions of said body 14.1 as a result of thermal expansion. The tubular body 14.1 is constructed of transparent material, for example of polymethyl methacrylate, and exhibits, on its lateral surface, a plurality of chromatically differentiated filtering sectors, which are constituted, for example, by coloured strip-like films 14.2, 14.3, 14.4 differently filtering the luminous radiations. Said strip-like films 14.2, 14.3, 14.4 are applied, for example, by means of adhesive substances and are extended in the axial direction, over the entire length of said body. In the example illustrated in Fig. 4, it is possible to see only three strip-like films 14.2, 14.3, 14.4, which are carried on corresponding zones of the lateral surface of the tubular body 14.1 and exhibiting different colorations, (for example, red, green and yellow), while a fourth zone (not visible in the drawings) of the lateral surface of said tubular body 14.1 is not covered by any film, in order to transmit the light emitted by the lamp 13 in its natural coloration (white, multichromatic).
In proximity to one of its axial ends, the tubular body 14.1, fitted onto the electrical lamp 13 accommodated in the base crossmember 12.1 of the frame 12, exhibits a first external circumferential throat 13.5 (Fig. 4), in which a continuous transmission belt 15.1 is engaged. Said transmission belt 15.1 is driven in circulatory motion by means of an electric motor/reduction gear set 15, fixed on said support plate 13.1 carrying said lamp 13 and provided to rotate a guide pulley 15.2, with an axis parallel to that of the tubular body 14.1 and on which said transmission belt 15.1 is wound.
Moreover, according to the illustrated embodiment, said tubular body 14.1 exhibits a second external circumferential throat 14.6, which is close to said first throat 14.5 and in which a further continuous transmission belt 15.3 is engaged. Said further transmission belt 15.3 is wound and directed about the tubular body 14.1 of the multichromatic filter means 14, which is fitted coaxially on the electrical lamp 13 accommodated and supported in the top crossmember 12.3 of the frame 12 and which is, to this end, provided with a corresponding external circumferential throat, in which said belt 15.3 is engaged.
By means of such an arrangement, the rotation of the electric motor/reduction gear set 15 directly effects the rotation of the multichromatic optical filter means 14 about the electrical lamp 13 disposed in the base crossmember 12.1 and, by means of said filter means, thus effects the synchronised rotation of the multichromatic optical filter means 14 about the electrical lamp 13 provided in the top crossmember 12.3 of the frame 12.
The electric motor/reduction gear set 15 may be rotated continuously, or in steps, or in selective mode under the direct control of the user of the lighted advertising sign 10.
As a result of the rotation of the multichromatic optical filter means 14, different filtering sectors (14.2, 14.3, 14.4, ...) of said means are, in selective mode or in automatic, continuous or discontinuous sequence, brought to be interposed between each light source 13 and the opposite edge 11.2, 11.3 of the panel 11, permitting the passage, towards said panel, of luminous radiations belonging to different bands of the luminous spectrum. This significantly increases the attractiveness of the lighted advertising sign 10 as compared with known advertising signs of the same type.

Of course, numerous variants may be implemented with respect to what has been described and illustrated purely by way of example.
Thus, for example, the chromatically differentiated filtering sectors of the multichromatic optical filter means may be, for example, constructed by means of layers of different pigments, deposited by means of serigraphy on the surface of the transparent tubular body of said means. Alternatively, said body may directly incorporate chromatically differentiated filtering sectors. Moreover, said chromatically differentiated filtering sectors may extend in non-linear progressions along said tubular body, for example in a helical progression or the like.
On the other hand, the body of said multichromatic filter means may, for example, be conformed in the manner of a disc subdivided into chromatically differentiated filtering sectors and which rotates to match light sources which do not extend linearly, so as to dispose alternately one or the other of its chromatically differentiated filtering sectors between the light source and the opposite lateral edge of the panel carrying the advertising messages. Alternatively, it may be simply plate-shaped, with a rectilinear or curvilinear profile, and may be displaceable along corresponding guides, for example manually, to dispose alternately one or the other of its chromatically differentiated filtering sectors between the light source and the opposite lateral edge of the panel carrying the advertising messages.
Obviously, the abovedescribed arrangement comprising, according to the invention, at least one light source and pertinent multichromatic optical filter means, capable of intercepting - sequentially or selectively - by different filtering sectors the beam of luminous radiations emitted by said source, may also be utilised for the illumination, in a diffuse manner, of the advertising panel and/or of the interior of the lighted sign, rather than to illuminate the advertising panel by means of rays passing through at least one of its lateral edges. The diffuse and chromatically variable illumination of the advertising sign thus obtained ensures a pleasing and attractive visual effect.
Although there has been illustrated and described a lighted advertising sign provided with two light sources opposed to opposite lateral edges of the panel, naturally lighted advertising signs having a single light source or having more than two light sources fall within the scope of the present invention. In such a case, for example, the multichromatic optical filter means may each be rotated by means of their own drive means, as is clearly evident from Fig. 4.
It is self-evident that transmission means different from those illustrated, for example transmission means by contact with toothed wheels, may also be employed.
Moreover, the present invention may be utilised as a lighted blackboard, in which the panel, which is possibly not incised and carries a dark (black) background, for example produced by serigraphy, acts as a medium for writing by means of a writing pen with suitable pigments, to form lettering or drawings which are illuminated upon contact with the panel.
According to a particularly advantageous modified embodiment of the invention, the advertising messages are not incised in the advertising panel by means of milling - this being a lengthy and complex, and therefore costly, operation.
In said modified embodiment, first of all a laminar mask is constructed, for example made of a metal sheet material, in which the preselected advertising message is formed by means of stencilling.
Said mask is then superposed on an unprocessed panel and, by means of suitable equipment (such as a compressed air gun) an operation of dimpling with microspheres is carried out. Thus, by means of such an operation, parts having a rough surface are formed on the panel through the stencilling of the mask, with an effect similar to that of a lapped surface, reproducing the advertising message.
The advertising panel thus constructed and illuminated by means of light passing through presents the advertising lettering to the public with a high degree of clarity and colour emphasis.
The aforementioned operations are repeatable on a large series of panels, at high speed and at low cost.

## Claims

1. Lighted advertising sign, including at least one advertising panel and at least one light source intended to illuminate - directly or indirectly - said at least one panel, characterised in that it comprises multichromatic optical filter means (14), exhibiting at least two chromatically differentiated filtering sectors (14.2, 14.3, 14.4) and disposed to intercept a beam of luminous radiations emitted by said at least one light source to illuminate - directly or indirectly - said at least one advertising panel (11), so as to permit alternately the passage, towards said panel (11), of luminous radiations belonging to different bands of the luminous spectrum, and in that said multichromatic optical filter means (14) are movable with respect to said light source (13), so as to interpose, in selective mode or in automatic sequence, different ones of their filtering sectors (14.2, 14.3, 14.4) between said at least one light source (13) and said at least one panel (11), thus permitting the variation, continuously or according to selection by the user, of the chromaticity of the luminous radiations passing through for the illumination of said panel.

2. Lighted advertising sign according to Claim 1, including at least one panel illuminated by means of light passing through at least one of its lateral edges, comprising at least one light source disposed in proximity to a lateral edge of the panel, which is transparent or translucent and exhibits advertising messages or the like which have been incised, and in which the light emitted by the source and passing through the adjacent lateral edge of the panel is reflected and/or diffracted and/or diffused through the incisions of the panel, which are thus made luminous with respect to the remaining part of said panel, characterised in that said multichromatic optical filter means (14) are disposed between each light source (13) and an opposed lateral edge (11.2, 11.3) of said at least one panel (11), thus permitting the variation, continuously or according to selection by the user, of the chromaticity of the luminous radiations passing within the incisions provided in said panel.

3. Advertising sign according to Claim 2, in which said at least one light source is linear and extends along a lateral edge of the panel, such as, for example, a cylindrical fluorescent lamp, characterised in that said multichromatic optical filter means (14) comprise a tubular body (14.1) fitted onto said light source (13) and rotatable with respect to the same, and in that said tubular body (14.1) exhibits a plurality of chromatically differentiated filtering sectors (14.2, 14.3, 14.4).

4. Advertising sign according to Claim 3, characterised in that said tubular body (14.1) of the multichromatic optical filter means (14) is rotated about said light source (13), continuously or in steps, or in selective mode, by means of electric motor/reduction gear means (15) and corresponding transmission means, for example flexible transmission means (15.1, 15,2).

5. Advertising sign according to Claim 4, in which two light sources are respectively opposed to opposite lateral edges of the panel, characterised in that the tubular body (14.1) of the multichromatic optical filter means (14), which is fitted onto a first light source (13) is rotated about said source by means of electric motor/reduction gear means (15) and corresponding transmission means, for example flexible tranmission means (15.1, 15.2), while the tubular body (14.1) of the multichromatic optical filter means (14) fitted onto the other light source (13) is rotated about the same by means of tranmission means, for example flexible transmission means (15.3), which are kinematically connected to said tubular body (14.1) fitted onto said first light source (13).

6. Advertising sign according to Claim 3, characterised in that said tubular body (14.1) of the multichromatic optical filter means (14) is transparent or translucent and exhibits a plurality of chromatically differentiated filtering sectors (14.2, 14.3, 14.4) which are constituted, for example, by strip-like films carried on corresponding zones of the lateral surface of said tubular body and exhibiting different colorations, or constructed, for example, by means of layers of different pigments deposited by means of serigraphy on zones of the surface of said tubular body.

7. Advertising sign according to Claim 3, characterised in that said tubular body of the multichromatic optical filter means (14) incorporates a plurality of chromatically differentiated filtering sectors.

8. Advertising sign according to Claim 2, characterised in that said multichromatic optical filter means comprise a body conformed in the manner of a disc, subdivided into chromatically differentiated filtering sectors and which rotates to dispose alternately one or the other of its chromatically differentiated filtering sectors between the light source and the opposite lateral edge of the panel carrying the advertising messages.

9. Advertising sign according to Claim 2, characterised in that said multichromatic optical filter means comprise a plate-shaped body, with a rectilinear or curvilinear profile, exhibiting a plurality of chromatically differentiated filtering sectors and displaceable along corresponding guides, for example manually, to dispose alternately one or the other of its chromatically differentiated filtering sectors between the light source and the opposite lateral edge of the panel carrying the advertising messages.

10. Lighted advertising sign according to Claim 2, characterised in that said incisions in the advertising panel are formed by surface areas which have been made rough, with the effect of a lapped surface, for example by means of dimpling with microspheres, utilising a laminar mask, exhibiting the advertising message to be reproduced, constructed by means of stencilling.

11. Advertising sign according to one or more of the preceding claims, characterised by application as a lighted blackboard, in which the panel, which is possibly not incised and carries a dark (black) background, acts as a medium for writing by means of a writing pen with suitable pigments, to form lettering or drawings which are illuminated upon contact with the panel.
